# DEMANDE DE BREVET EUROPEEN

(11) **EP 0 911 958 A1**
(43) Date de publication de la demande: **28.04.1999**
(21) Numéro de dépôt: 98402528.8
(22) Date de dépôt: 13.10.1998
(51) Int. Cl.: H02P 9/48, H02P 9/30, H02J 7/14

(54) **Dispositif pour le redressement synchrone d'un alternateur**

(30) Priorité: 15.10.1997 FR 9712879
(71) Demandeur: VALEO EQUIPEMENTS ELECTRIQUES MOTEUR, 94000 Créteil (FR)
(72) Inventeur: Sebille, Dominique, 94110 Arcueil (FR)
(74) Mandataire: Le Forestier, Eric

(57) **Abrégé**

Dispositif de redressement de la tension en sortie d'un alternateur polyphasé comportant un pont de Graetz d'interrupteurs commandés (M) destiné à être relié à différentes lignes de phase de l'alternateur, ainsi que des moyens (Q) pour commander lesdits interrupteurs de façon à générer une tension redressée, caractérisé en ce que lesdits moyens de commande (Q) comportent un pont de Graetz d'éléments de type diodes qui génère des signaux pour la commande des interrupteurs du pont de Graetz commandé (M), (figure 1).

## Description

La présente invention est relative aux dispositifs pour le redressement synchrone d'un alternateur.

On sait que les véhicules automobiles du futur auront de plus en plus besoin d'énergie électrique pour fonctionner dans les conditions optimales afin de respecter les nouvelles législations qui seront en place dans quelques années notamment en matière de pollution.

L'invention propose quant à elle un dispositif de redressement qui participe à ces objectifs et notamment permet d'améliorer le rendement et le débit d'un alternateur en diminuant les pertes dans le redressement, ainsi que les pertes fer à l'intérieur du stator et du rotor. Le dispositif proposé par l'invention permet également de réduire le bruit magnétique de l'alternateur en évitant les commutations non linéaires de courant à faible niveau.

Il est classique d'utiliser pour le redressement de la tension de sortie d'un alternateur polyphasé de véhicule automobile des ponts de Graetz à redressement double alternance constitués par des montages d'interrupteurs commandés de façon synchrone par rapport aux tensions des différentes phases de l'induit.

On pourra à cet égard avantageusement se référer aux demandes de brevet EP-665.637 et EP-762.596.

Les interrupteurs utilisés sont généralement des transistors à grille isolée, à canal N à enrichissement (communément appelés MOSFET). Par rapport aux ponts de Graetz à diodes, les ponts à interrupteurs présentent l'avantage de permettre de diminuer la chute de tension directe à leurs bornes.

Toutefois, un tel pont de redressement pour véhicule automobile fonctionne dans un environnement électrique très perturbé et ceci peut entraîner des dérèglements du fonctionnement de la commande des interrupteurs,

Un but de l'invention est de proposer un dispositif de redressement qui permet de pallier ces inconvénients.

Le dispositif proposé par l'invention présente également l'avantage d'être d'un coût très bas, ainsi que d'être susceptible de résister à des températures élevées.

Plus particulièrement, l'invention propose un dispositif de redressement de la tension en sortie d'un alternateur polyphasé comportant un pont de Graetz d'interrupteurs commandés destiné à être relié à différentes lignes de phase de l'alternateur, ainsi que des moyens pour commander lesdits interrupteurs de façon à générer une tension redressée, caractérisé en ce que lesdits moyens de commande comportent un pont de Graetz d'éléments de type diodes qui génère des signaux pour la commande des interrupteurs du pont de Graetz commandé.

Avantageusement, les éléments de type diodes sont les jonctions base-émetteur de transistors bipolaires.

Notamment, les émetteurs desdits transistors bipolaires sont reliés aux lignes de phase de l'alternateur, leurs collecteurs étant reliés à des circuits pour la mise en forme des tensions ou intensités de courant desdits collecteurs pour la commande des interrupteurs du pont d'interrupteurs.

Selon une première variante de réalisation, les bases de deux transistors dont les émetteurs sont reliés à une même ligne de phase sont montés entre la masse et la sortie redressée du pont d'interrupteurs commandés.

Selon une autre variante, le dispositif comporte un circuit d'ajustement de tension aux bornes duquel les bases de deux transistors dont les émetteurs sont reliés à une même ligne de phase sont montés.

Avantageusement, notamment, le circuit d'ajustement de tension comporte des moyens à impédance réglable et notamment des moyens résistifs réglables.

De préférence, le dispositif comporte des diodes de protection des jonctions base-émetteur de transistors bipolaires.

De façon préférée, les interrupteurs commandés sont de type MOSFET.

Notamment, les moyens de mise en forme des tensions ou intensité des collecteurs qui commandent les grilles des interrupteurs positifs du pont de Graetz comportent des moyens de décalage de tension.

D'autres caractéristiques et avantages de l'invention ressortiront encore de la description qui suit qui est purement illustrative et non limitative et qui doit être lue en regard des dessins annexés sur lesquels :
- la figure 1 est une représentation synoptique d'un dispositif de redressement conforme à un mode de réalisation possible de l'invention ;
- la figure 2 est une représentation schématique de moyens d'un dispositif du type de celui illustré sur la figure Q ;
- la figure 3 est un schéma d'un exemple de réalisation du dispositif de la figure 1.

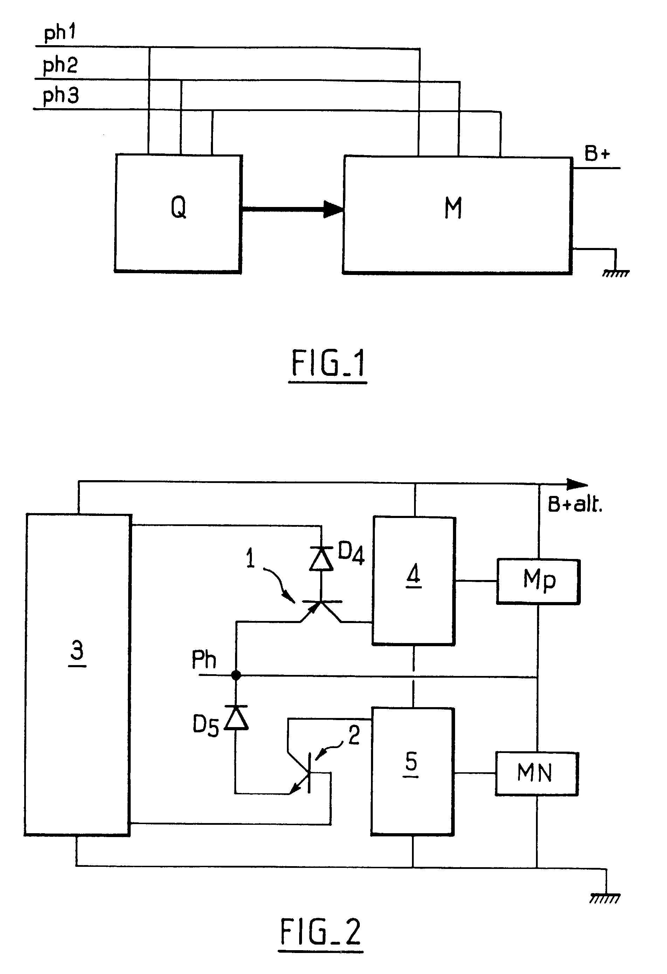

Sur la figure 1, on a représenté trois lignes de phase Ph1, Ph2 et Ph3 en sortie de trois bobinages d'un alternateur triphasé.

Le dispositif de redressement illustré sur cette figure 1 est monté entre la masse et une sortie redressée où est générée une tension B⁺ₐₗₜ qui est par exemple utilisée pour la charge de la batterie du véhicule.

Ce dispositif comporte un pont de puissance M, appelé pont esclave, qui est un pont de Graetz à interrupteurs commandés qui redresse les tensions des différentes lignes de phase Phl, Ph2 et Ph3.

Le dispositif comporte également un montage basse puissance (traversé par des intensités de courant inférieures à 100mA.), référencé par Q sur la figure 1 et appelé pont image dans la suite du texte. Ce pont image Q est constitué par un pont de Graetz de diodes ou d'éléments équivalent, dont les points milieux des différents demi-ponts sont reliés respectivement aux différentes lignes de phase Ph1, Ph2 et Ph3 et dont les potentiels d'extrémité sont utilisés pour commander les interrupteurs du pont M.

Avec une structure de ce type, on combine les avantages des ponts de Graetz à diodes et des ponts de Graetz à interrupteurs : on bénéficie de l'avantage que constitue la commutation naturelle des diodes, sans subir de chute de tension en sortie, puisque les ponts de Graetz à interrupteurs, et notamment à interrupteurs de type MOSFET, présentent une chute de tension faible. Grâce au pont image Q, la commande des interrupteurs est fiable : le pont image Q réagit en effet sensiblement comme un pont standard à diodes et transmet instantanément l'information de commande aux interrupteurs du pont M esclave. Ainsi, la commande des interrupteurs est particulièrement sure, ce qui permet un fonctionnement en boucle ouverte, sans contre réaction électronique.

Avantageusement, les diodes des branches du pont Q sont constituées par les jonctions base-émetteur de transistors bipolaires.

Notamment, ainsi qu'on l'a illustré sur la figure 2, les deux diodes d'un pont de Graetz qui sont reliées à une même ligne de phase Ph sont constituées par les jonctions base-émetteur de deux transistors bipolaires 1 et 2 respectivement de type PNP et NPN, dont les émetteurs sont reliés à ladite ligne de phase Ph et dont les bases sont montées soit entre la masse et la sortie redressée du pont M, soit aux bornes d'un circuit 3 de référence de tension lui-même alimenté par la sortie redressée du pont M de puissance.

Un tel circuit 3 permet de référencer le seuil de conduction des jonctions base émetteur des transistors 1 et 2 non plus par rapport aux potentiels B⁺ₐₗₜ et masse mais par rapport à des potentiels contrôlés.

Les collecteurs de ces transistors 1, 2 sont utilisés pour générer des signaux de commande. Ils sont reliés respectivement à des circuits 4, 5 pour la commande des deux interrupteurs du pont M qui sont reliés à la même ligne de phase, le circuit 4 commandant l'interrupteur positif ( c'est à dire celui relié à la ligne de tension redressée B⁺ₐₗₜ) (interrupteur référencé par MP), le circuit 5 commandant l'interrupteur négatif (c.a.d. relié à la masse) (interrupteur MN).

Par ailleurs, on sait que des jonctions base-émetteur classiques sont susceptibles de ne pas supporter des tensions supérieures à 12 volts. Pour éviter un claquage des transistors 1 et 2 par effet d'avalanche, on prévoit avantageusement des diodes de protection D4, D5, qui sont par exemple montées entre la base du transistor 1 et le circuit de référence de tension 3 pour la première, en étant passante de ladite base vers ledit circuit 3, et entre l'émetteur du transistor 2 et la ligne de phase Ph , en étant passante dudit émetteur vers ladite phase, pour la seconde.

En variante, les transistors 1 et 2 peuvent être choisis de façon que leurs jonctions base-émetteur supportent des tensions supérieures à 30V, auquel cas, notamment où les tensions de phase sont de l'ordre de 11 Volts, des diodes séries ne sont plus nécessaire.

Les circuits 4 et 5 sont des circuits qui permettent de mettre en forme les signaux qui correspondent aux tensions des collecteurs des transistors bipolaires 1 et 2 pour commander la grille des interrupteurs MOSFET MP et MN.

Le circuit 4 pour la commande de la grille de l'interrupteur MN négatif est par exemple un dispositif de mise en forme standard.

Le circuit 5 pour la commande de la grille de l'interrupteur MP positif comporte un dispositif à décalage de tension permettant d'élever le potentiel au delà de la tension B⁺ₐₗₜ en sortie de l'alternateur.

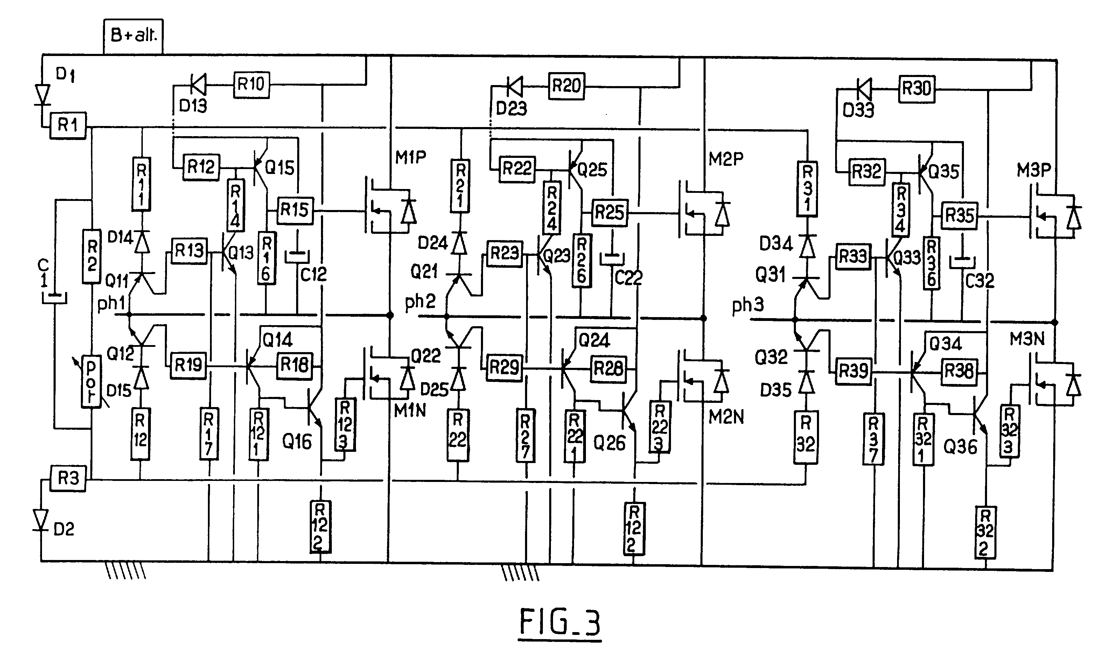

Le schéma complet d'un circuit de redressement conforme à un mode de réalisation possible de l'invention est illustré sur la figure 3.

Sur cette figure 3, on a référencé par M1P, M2P, M3P et M1N, M2N et M3N les interrupteurs respectivement positifs et négatifs reliés aux lignes de phase Ph1, Ph2 et Ph3 d'un pont de Graetz d'interrupteurs commandés correspondant au pont M de la figure 1. On notera que ces interrupteurs de puissance peuvent être constitués d'un ou plusieurs MOSFET en parallèle.

Les transistors qui constituent les diodes du pont Q et qui sont reliés respectivement à chacune de ces trois phases ont été référencés par Q11, Q21 et Q31 pour ceux qui correspondent aux transistors 1 de la figure M et par Q12, Q22, et Q32 pour ceux qui correspondent aux transistors 2.

Le circuit 3 de régulation de tension comprend un condensateur C1 monté en parallèle avec une résistance fixe R2 et une résistance POT , qui est avantageusement variable. A une de ces extrémités, ce sous-circuit est relié à la sortie redressée de l'alternateur (tension B⁺ₐₗₜ) par une résistance R1 et une diode D1, qui est passante de ladite sortie redressée vers ledit sous-circuit. A son autre extrémité, ce sous-circuit est relié à la masse par une résistance R3 et une diode D2, laquelle est passante dudit sous-circuit vers la masse.

Les bases des transistors Q11, Q21, Q31 sont reliées au point commun entre d'une part le sous-circuit D1, R1 et d'autre part le sous-circuit C1, POT, R2 par des diodes référencées respectivement D11, D21, D31 qui sont montées en série avec des résistances référencées respectivement R11, R21, R31.

Les bases des transistors Q12, Q22, Q32 sont reliées au point commun entre d'une part le sous-circuit D2, R3 et d'autre part le sous-circuit C1, POT, R2 par des diodes référencées respectivement D15, D25, D35 montées en série avec des résistances référencées respectivement R12, R22, R32.

Les valeurs de ces résistances, et notamment celle de la résistance POT lorsqu'elle est variable, sont choisies et ajustées de façon à régler finement les temps de commutation des interrupteurs M1P, M2P M3P, M1N, M2N, M3N et optimiser les temps de conduction de ceux-ci. Ainsi, le rendement de la machine est optimisé et on évite les courts circuits temporaires dus à la mise en conduction simultanée de deux interrupteurs d'un bras du pont esclave, laquelle pourrait aboutir à court circuiter deux phases de l'alternateur.

Les circuits 5 pour la remise en forme des intensités de courant en sortie des collecteur des transistors Q12, Q22, Q32 comportent une résistance R19, R29, R39 reliée à la base d'un transistor pnpQ14, Q24, Q34 dont l'émetteur est relié à la ligne de tension redressée.

Le collecteur de ces transistors Q14, Q24, Q34, est relié à la masse par une résistance R 121, R 221, R 321. Il est également relié à la base d'un transistor NPN Q16, Q26, Q36 dont le collecteur est relié à la ligne de tension redressée et dont l'émetteur commande la grille respectivement des interrupteurs MOSFET M1N, M2N, M3N.

Les circuits 4 pour la commande et la mise en forme des signaux en sortie des collecteurs des transistors Q11, Q21, Q31 comporte un transistor NPN Q13, Q23, Q33 dont la base est reliée audit collecteur par l'intermédiaire d'une résistance R13, R23, R33. L'émetteur de ce transistor est relié à la masse. Son collecteur est relié à la base d'un transistor Q15, Q25, Q35 par l'intermédiaire d'une résistance R14, R24, R34. Cette base est également reliée à la ligne de tension redressée par l'intermédiaire d'un circuit qui comporte en série des résistances R12, R22, R32, des diodes D13, D23, D33 et des résistances R10, R20 et R30, lesdites diodes étant passantes de ladite ligne de tension redressée vers ladite base.

Le collecteur des transistors Q15, Q25 et Q35 commande la grille des transistors M1P, M2P et M3P par l'intermédiaire d'une résistance R15, R25 et R35. Ce collecteur est également relié aux lignes de phase Ph1, Ph2 et Ph3 par l'intermédiaire des résistances R16, R26, et R36. L'émetteur de ces transistors est, quant à lui, relié d'une part aux dites phases par des condensateurs C12, C22 et C32 et d'autre part aux points communs entre les résistances R12, R22, R32 et les diodes D13, D23 et D33.

Un tel circuit 4 permet de mettre en forme les signaux issus du pont image Q en décalant le niveau de tension afin de commander les interrupteurs positifs.

Un circuit du type de celui illustré sur la figure 3 présente l'avantage de permettre de réduire les pertes en conduction des diodes du pont, ainsi que de la force électromotrice induite dans le stator de la machine. Le gain total en rendement peut être de plus de 10% suivant les conditions de fonctionnement.

Par ailleurs, étant donné que la commande des interrupteurs est efficace quelles que soient les conditions de vitesse et de débit de l'alternateur, un dispositif de redressement conforme à l'invention présente l'avantage de permettre pour l'alternateur des vitesses d'amorçage plus basses, ainsi que de meilleurs débits à basse vitesse.

En outre, il permet des bruits acoustiques et des pertes de fer dans l'alternateur réduits.

Egalement, on notera qu'un avantage des dispositifs qui viennent d'être décrits tient en leur aptitude à être intégrés sur des circuits ASIC.

Egalement encore, un autre avantage des dispositifs conforme à l'invention tient en l'aptitude de leur commande d'interrupteurs à reproduire les formes d'ondes d'une machine synchrone de type alternateur automobile, alors d'une part que ces formes peuvent être très différentes de celles d'un réseau triphasé classique étant donné notamment qu'elles comportent de nombreux harmoniques et que les impédances des différents bobinages sont souvent déséquilibrées et d'autre part qu'elles peuvent être très variables en fréquence, débit, forme d'onde, etc. d'un alternateur à l'autre.

Toutes ces caractéristiques aboutissent à l'amélioration du comportement global d'un alternateur, ce qui permet de consommer moins de carburant à puissance électrique fournie constante.

## Revendications

1. Dispositif de redressement de la tension en sortie d'un alternateur polyphasé comportant un pont de Graetz d'interrupteurs commandés (M) destiné à être relié à différentes lignes de phase de l'alternateur (Ph1, Ph2, Ph3), ainsi que des moyens (Q) pour commander lesdits interrupteurs de façon à générer une tension redressée, caractérisé en ce que lesdits moyens de commande (Q) comportent un pont de Graetz d'éléments de type diodes qui génère des signaux pour la commande des interrupteurs du pont de Graetz commandé (M).

2. Dispositif selon la revendication 1, caractérisé en ce que les éléments de type diodes sont les jonctions base-émetteur de transistors bipolaires (1, 2).

3. Dispositif selon la revendication 2, caractérisé en ce que les émetteurs desdits transistors bipolaires (1, 2) sont reliés aux lignes de phase de l'alternateur, leurs collecteurs étant reliés à des circuits pour la mise en forme des tensions ou intensités de courant desdits collecteurs pour la commande des interrupteurs du pont d'interrupteurs.

4. Dispositif selon l'une des revendications 2 ou 3, caractérisé en ce que les bases de deux transistors (1, 2) dont les émetteurs sont reliés à une même ligne de phase sont montés entre la masse et la sortie redressée du pont d'interrupteurs commandés.

5. Dispositif selon l'une des revendications 2 ou 3, caractérisé en ce qu'il comporte un circuit d'ajustement (3) de tension aux bornes duquel les bases de deux transistors (1, 2) dont les émetteurs sont reliés à une même ligne de phase sont montés.

6. Dispositif selon la revendication 5, caractérisé en ce que le circuit d'ajustement de tension (3) comporte des moyens à impédance réglable.

7. Dispositif selon la revendication 6, caractérisé en ce que ces moyens (3) comportent des moyens à résistance réglable.

8. Dispositif selon l'une des revendications 2 à 7, caractérisé en ce qu'il comporte des diodes de protection des jonctions base-émetteur de transistors bipolaires.

9. Dispositif selon l'une des revendications précédentes, caractérisé en ce que les interrupteurs commandés sont de type MOSFET

10. Dispositif selon les revendications 2 et 9 prises en combinaison, caractérisé en ce que les moyens de mise en forme des tensions ou intensité des collecteurs qui commandent les grilles des interrupteurs positifs du pont de Graetz comportent des moyens de décalage de tension.
